Europäisches Patentamt

European Patent Office

Office européen des brevets

(11) Publication number: **0 131 895**
**B1**

## EUROPEAN PATENT SPECIFICATION

(45) Date of publication of patent specification: 01.04.87

(51) Int. Cl.⁴: **G 11 B 5/82**

(21) Application number: **84108082.3**

(22) Date of filing: **10.07.84**

(54) **Magnetic disk substrate.**

(30) Priority: **19.07.83 JP 131197/83**

(43) Date of publication of application:
**23.01.85 Bulletin 85/04**

(45) Publication of the grant of the patent:
**01.04.87 Bulletin 87/14**

(84) Designated Contracting States:
**DE FR GB NL**

(56) References cited:
**GB-A-1 257 281**
**GB-A-1 397 817**
**GB-A-1 493 160**
**US-A-3 719 525**

(73) Proprietor: **Hitachi Metals, Ltd.**
**1-2, Marunouchi, 2-chome Chiyoda-ku**
**Tokyo 100 (JP)**

(72) Inventor: **Endo, Juro**
**17 Higashi-beppu Kumagaya**
**Saitama (JP)**
Inventor: **Yamada, Hirohide**
**423-7 Hiramatsu-Honcho**
**Utsunomiya Tochigi (JP)**
Inventor: **Koike, Yoshiharu**
**600 Jurokken, Kumagaya**
**Saitama (JP)**

(74) Representative: **Strehl, Peter, Dipl.-Ing. et al**
**Strehl, Schübel-Hopf, Schulz Patentanwälte**
**Widenmayerstrasse 17 Postfach 22 03 45**
**D-8000 München 22 (DE)**

Courier Press, Leamington Spa, England.

**Description**

(1) Field of the Invention

The present invention relates to a disk substrate for a high-recording density magnetic disk having a continuous, thin film of a magnetic medium. More specifically, it relates to a ceramic disk substrate having such high surface precision and hardness that a magnetic disk manufactured therefrom can have extremely high recording density, and that it can be operated at a small flying height of a magnetic head.

(2) Description of the Prior Art

Magnetic disks have recently had increasingly high recording capacity and density. In order to have higher recording density, a magnetic medium layer has become thinner, and the spacing between the magnetic disk surface and a magnetic head has been decreasing.

A magnetic disk is repeatedly brought into contact with a magnetic head during the operation. More specifically, the magnetic disk is in contact with the magnetic head while it is not rotating, and as it rotates faster, the magnetic head begins to fly due to its lower surface configuration. The magnetic head is flying over the magnetic disk at a certain distance usually called "flying height" or "spacing", while the magnetic disk is rotating at a constant velocity. The head again comes into contact with the magnetic disk when the disk stops. This process is called a contact-start-stop (CSS) cycle. To withstand the impact caused by contact with a magnetic head during the CSS cycles, the magnetic disk substrate is required to have sufficiently high hardness.

Moreover, since the magnetic disk is rotated under the conditions of a very small flying height of a magnetic head, a good surface precision such as small surface roughness and undulation is also required for the magnetic disk. In addition, large pores on the surface cause recording errors if a pore size is almost as large as one tenth of a bit size. The surface precision is thus an important factor for increasing a magnetic recording density of the magnetic disk. Furthermore, when a thin magnetic film is formed on the disk substrate, for instance, by a sputtering method to provide a so-called thin-film magnetic disk, the magnetic disk is usually subject to heat treatment at temperatures up to about 400°C. So the disk substrate should have a thermal expansion coefficient which is sufficiently close to that of a magnetic medium layer formed thereon.

One target of a high recording density for a magnetic disk for longitudinal (in-plane) magnetic recording (hereinafter referred to simply as "longitudinal magnetic recording disk") is as high as more than $3 \times 10^3$ bits/mm². For this target, the thickness of a thin magnetic film formed on a disk substrate should be less than 0.2 μm and the spacing should be less than 0.2 μm. The target of a high recording density is much higher for a magnetic disk for perpendicular magnetic recording (hereinafter referred to simply as perpendicular magnetic recording disk"), more than $7,75 \times 10^4$ bits/mm². For this target, the magnetic film thickness and the spacing should be less than 0.2 μm and not more than 0.15 μm, respectively. To achieve these targets, a finished disk substrate, which is to be coated with a thin magnetic film, is required to have at least average roughness Ra of not more than 0.01 μm and short-range undulation of not more than 0.06 μm/4 μmm. The maximum surface roughness Rmax is desirably less than about 0.1 μm, particularly less than about 0.05 μm.

Recently, a high-purity alloy of Al and 4wt.%Mg of a JIS—5086 series is used for a high-recording density disk substrate. After grinding the surface of the Al-alloy substrate, an alumite layer is formed by anodization to provide a required surface hardness. Important factors of disk substrates of this kind are a thickness of an alumite layer, surface precision, the purity and heat resistance of the alloy, etc. These factors have close relations to the signal errors of disk magnetic media, the flyability of a magnetic head, contact-start-stop (CSS) durability, etc.

An alumite layer has a thermal expansion coefficient which is as low as about a quarter of that of the aluminium alloy, so the alumite layer tends to have cracks during a heat treatment step in the course of forming a layer of magnetic medium such as $\gamma$-Fe$_2$O$_3$. Thus, the thickness of a alumite layer affects not only surface hardness of the resulting disk but also surface cracking thereof. To prevent the surface cracking, the alumite layer should be as thin as possible to have increased deformability, because deformation can absorb an internal stress caused by the difference in thermal expansion between the A1 substrate and the alumite layer. In fact, the alumite layer is as thin as less than 3 μm to prevent the surface cracking between about 250°C and about 400°C. The alumite layer of such thickness, however, does not give satisfactory surface hardness to the disk substrate. Accordingly, even though a lubricant layer is formed on the magnetic medium surface, the magnetic disk can hardly endure more than 20,000 contact-start-stop (CSS) cycles without deteriorating its magnetic recording properties, especially its ouptut level by 10%.

Ceramics have proven to be suitable materials for disk substrates because their sintered bodies are extremely hard and dimensionally stable. Particularly, alumina and/or zirconia-base ceramics are highly suitable for disk subtrate in that they have high density (low porosity) and relatively close thermal expansion coefficients to those of magentic media. Ceramic disk substrates manufactured simply by sintering under atmospheric pressure, however, do not always have a porosity which can meet the above requirements, but sometimes have as large a porosity as more than 1—2%. Such a large pososity makes it impossible to achieve the required surface precision of average roughness Ra of not more than 0.01 μm and short-range undulation of not more than 0.06 μm/4mm, etc.

**0 131 895**

Summary of the Invention

An object of the present invention, therefore, is to provide a ceramic magnetic disk substrate having sufficiently high density, hardness and surface precision.

Another object of the present invention is to provide an alumina and/or zirconia-base ceramic disk substrate having high density, hardness and surface precision, as well as a thermal expansion coefficient between room temperature and about 400°C which is so close to that of a magnetic medium film to be formed thereon that the magnetic medium film is never cracked or broken.

A magnetic disk substrate made of ceramics according to the present invention consists essentially of $Al_2O_3$ and/or $ZrO_2$, having a porosity of not more than 0.1%, a thermal expansion coefficent of $70 \times 10^{-7}/$°C—$110 \times 10^{-7}/$°C between room temperature and about 400°C, and Vickers' hardness of 1200 or more. Such a magnetic disk substrate can be manufactured through a hot press or hot isostatic press process.

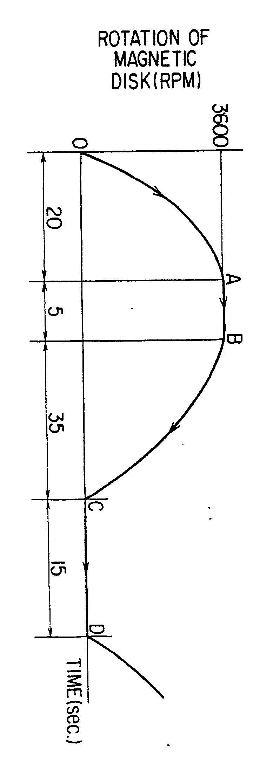

Brief Description of the Drawing

The sole figure is a graph showing a contact-start-stop test cycle.

Description of the preferred Embodiments

Ceramic materials for the magnetic disk substrate of the present invention consist essentially of alumina, zirconia or alumina and zirconia. To make the magnetic disk substrate harder, alumina and/or zirconia may be combined with one or more composite components, which are carbides, nitrides and borides of elements selected from groups IVa, Va and VIa of the Periodic Table. The preferred composite components are TiC and $TiB_2$. To improve the density of a sintered ceramic body, sintering aids such as MgO, $ZrO_2$, $Y_2O_3$, $Cr_2O_3$, $MnO_2$, $SiO_2$, $TiO_2$, NiO and AlN may be added alone or in combination in the amount of up to 5 weight% in total. The minimum amount of the sintering aids added may be 0.5 weight%.

Ceramics which may be used in the present invention may be classified in four categories:

1. Alumina-base ceramics
2. Alumina·titanium carbide and/or titanium boride-base ceramics
3. Zirconia·yttria-base ceramics
4. Alumina-zirconia-yttria-base ceramics

Alumina-base ceramics include up to 5 weight% in total of one or more sintering aids selected from the group consisting of MgO, $ZrO_2$, $Y_2O_3$, $Cr_2O_3$, $MnO_2$, $SiO_2$, NiO and $TiO_2$. The sintering aids are preferably 0.5—5 weight% in total. $ZrO_2$ is preferably combined with $Y_2O_3$.

With respect to alumina·titanium carbide and/or titanium boride-base ceramics, the total amount of TiC and/or $TiB_2$ is up to 50 weight%, preferably up to 30 weight%. These ceramics may also include up to 5 weight% of one or more sintering aids selected from the group consisting of MgO, $ZrO_2$, $Y_2O_3$, $Cr_2O_3$, $MnO_2$, $SiO_2$, $TiO_2$, NiO and AlN. These sintering aids are preferably 0.5—2 weight% in total.

Zirconia·yttria-base ceramics contain 4—30 weight% $Y_2O_3$ based on $ZrO_2$. $Y_2O_3$ serves to stabilize $ZrO_2$, so such sintering aids as mentioned above are not necessary to increase the density of a sintered body. However, the sintering aids may be added. Composite components selected from the group consisting of carbides, nitrides and borides of elements of Groups IVa, Va and VIa of the Periodic Table may also be included in the amount of up to 50 weight%, preferably up to 30 weight% in total. TiC and $TiB_2$ are the desired composite components.

With respect to alumina·zirconia·yttria-base ceramics, the alumina content may be up to 95 weight%. $Y_2O_3$ is necessary for stabilizing $ZrO_2$. The ratio of $Y_2O_3$ to $ZrO_2$ is 4—30 weight%. The $Al_2O_3$—$ZrO_2$—$Y_2O_3$ ceramics may include one or more composite components selected from the group consisting of carbides, nitrides and borides of elements of Groups IVa, Va and VIa of the Periodic Table in the amount of up to 50 weight%, preferably up to 30 weight% in total.

It has been found that a ceramic fine powder mixture of the above-mentioned composition can be formed into a high-density, high-hardness magnetic disk substrate by way of a hot press (HP) method or a hot isostatic press (HIP) method.

In the hot press, the ceramic powder may be in advance molded into a desired shape. If necessary, the ceramic powder molding may be placed under reduced pressure to remove gas entrapped within the molding. In such an atmosphere, the hot pressing is carried out at temperatures of 1400°C—1700°C and press pressure of 200 to 400 bar for 1/2—2 hours.

In the hot isostatic press, a ceramic powder is usually molded into a desired shape at room temperature, and then sintered under atmospheric pressure, before undergoing the HIP treatment. The sintered body is isostatically pressed with inert gas such as argon at temperatures of 1200°C—1600°C and pressure of 1000—1500 bar for 1—5 hours.

The HIP pross may be preceded by a hot press (HP) process if it is not easy to increase the density of a ceramic sintered body only by a HIP method. The hot press is particularly desirable for $Al_2O_3$—(TiC and/or $TiB_2$) ceramics.

Ceramic disk substrates thus prepared are much superior in hardness and density to those prepared by usual sintering under atmospheric pressure. The ceramic disk substrate thus prepared has an extremely high density of not less than 99.9% of the theoretical value, so a porosity of not more than 0.1%. In addition, it is very hard, having Vickers' hardness (Hv) of 1200 or more.

A thermal expansion coefficient ($\alpha$) is another important factor of the disk substrate, because the

3

difference in a thermal expansion coefficient between the disk substrate and a magnetic medium layer formed thereon deeply affects how strongly they are adhered to each other. Given a certain difference in α, the adhesion of a magnetic medium layer to a disk substrate generally decreases as the thickness of the magnetic layer increases. The reason therefor is considered that the thicker the magnetic medium layer, the less it can be deformed, which means that it cannot fully absorb an internal stress caused, during heat treatment, due to the difference in α, making it more vulnerable to cracking and failure.

For a longitudinal magnetic recording disk having a thin magnetic medium film whose thickness is usually between 0.03 μm and 0.2 μm, the difference in α between the disk substrate and the magnetic medium film should be within ± about $30 \times 10^{-7}$/°C. On the other hand, for a perpendicular magnetic recording disk having a ferromagnetic (for instance, Permalloy) under layer as thick as 0.2 μm—0.8 μm and a magnetic medium (for instance, Co—Cr) upper layer as thick as 0.1 μm—0.7 μm, the difference in α should be smaller, because the total thickness of the two layers is much larger. The desired difference in α is thus within the range of ± about $20 \times 10^{-7}$/°C.

Various magnetic media and ferromagnetic materials which may be used in the present invention have the following thermal expansion coefficients between room temperature and about 400°C:

| | |
|---|---|
| $\gamma Fe_2O_3$ | $80 \times 10^{-7}$/°C |
| Co—Ni | $100 \times 10^{-7}$/°C—$120 \times 10^{-7}$/°C |
| Co—Cr | $100 \times 10^{-7}$/°C—$120 \times 10^{-7}$/°C |
| Permalloy | $90 \times 10^{-7}$/°C—$110 \times 10^{-7}$/°C |
| Cr | $70 \times 10^{-7}$/°C—$80 \times 10^{-7}$/°C |

Thus, the ceramic disk substrate should have a thermal expansion coefficient of $70 \times 10^{-7}$/°C—$110 \times 10^{-7}$/°C between room temperature and about 400°C.

Not only the difference in α between a disk substrate and a magnetic layer, but also the thickness of the magnetic layer including a ferromagnetic under layer affect the adhesion therebetween. Specifically, in an alumina-base disk substrate, a 30 to 80 nm sputtered magnetic film of a Co—20wt.%Ni alloy can adhere to the substrate as strongly as 300 bar or more, but when the film thickness increases to 200 to 300 nm, the adhesion therebetween decreases so badly that it is not always possible to prevent the magnetic film from cracking or peeling off by heat treatment of minor causes such as small foreign matters. In general, when a magnetic film is as thin as 100 nm or less, the adhesion thereof to the ceramic disk substrate of the present invention is very strong even though the difference in α between them is somewhat large within the above mentioned range.

The as-sintered substrate has a very high porosity. For instance, the as-sintered alumina-base ceramic substrate including MgO, AlN, $ZrO_2$, etc. has a porosity of about 1%. This substrate, if polished, shows the following surface precision: average roughness of 0.02 μm, maximum roughness of 0.2 μm, short range undulation of 0.07 μm/4mm. It also has hundreds of pores of 3 μm or more per mm².

After HIP treatment, the disk substrate has a decreased porosity. It is to be noted that the porosity affects the level of surface precision. If the porosity is greater than 0.1% the desired level of surface precision could not be achieved.

The disk substrate of the present invention may be produced in the following way.

Ceramic powder materials are prepared and molded into a desired shape at room temperature. A ceramic powder molding is placed in an atmosphere of reduced pressure to remove gas entrapped within the molding, and then hot-pressed at 1400°C—1700°C under the press pressure of 200 to 400 bar for 1/2—2 hours.

Alternatively, the ceramic powder molding may be first sintered at 1400°C—1700°C under atmospheric pressure and then subjected to hot isostatic press at 1200°C—1600°C and 1000 to 1500 bar for 1—5 hours. As mentioned above, the HP step and the HIP step may be combined to provide a ceramic disk substrate with an increased density.

The substrate thus prepared is subjected to surface treatments: grinding, lapping and polishing. These treatments per se are conventionally known, so explanations thereof will not be made herein. The resulting disk substrate has average surface roughness Ra of not more than 0.01 μm and short-range undulation of not more than 0.06 μm/4mm. It also preferably has maximum surface roughness Rmax of less than 0.1 μm, particularly less than 0.05 μm. Such a high surface precision, together with a small porosity, is extremely important for a magnetic disk having a high recording density, because the qualities of magnetic recording are highly susceptible to surface irregularities of the disk substrate. Particularly for a perpendicular magnetic recording disk which is expected to have as high recording density as more than $7.75 \times 10^4$ bits/mm² and be operated at a spacing of 0.15 μm or less, the fact that the disk substrate of the present invention has very high surface precision is highly significant.

For a longitudinal magnetic recording disk, a magnetic medium layer may be formed on the polished surface of the ceramic disk substrate by various methods including sputtering, physical and chemical vapor deposition, plating, coating, etc. In order to provide increased recording density, a sputtering technique is most preferable. The sputtering technique per se is known to those skilled in the art, so no details thereof will be explained herein. A magnetic medium layer formed on the disk substrate by sputtering is generally as thick as 0.03 μm—0.2 μm.

On the other hand, for a perpendicular magnetic recording disk, a high-permeability under layer is first formed in the thickness of 0.2 µm—0.8 µm on the disk substrate, for instance, by sputtering. The high-permeability layer may be made of Permalloy. Formed on this layer is a magnetic medium upper layer in the thickness of 0.1 µm—0.7 µm.

The magnetic layer may be subjected to a burnishing treatment after coating with a lubricant such as carbon and fluorocarbon polymers. The lubricant layer is usually as thick as 10 to 60 nm for carbon and up to a few hundred angstroms for fluorocarbon polymers.

While the longitudinal magnetic recording disk is rotating, a magnetic head is flying over the disk by 0.15 µm—0.6 µm. This spacing between the disk and the magnetic head is as small as 0.15 µm or less when the perpendicular magnetic recording disk is used. It is to be noted that such small spacing cannot be fully realized without using the magnetic disk having the above mentioned surface precision. In fact, the alumite-coated aluminium disk has Ra of 0.03 µm or so and short-range undulation of 0.1 µm/4mm or so, which are too large to meet the spacing requirements of both types of magnetic heads, particularly of the perpendicular type.

The contact-start-stop durability of the magnetic disk according to the present invention is extremely high. It may vary widely depending on what magnetic head is used, but it may generally be said that with respect to CSS durability, the magnetic disk of the present invention is much superior to those conventional magnetic disks made from aluminium substates. For instance, magnetic disks comprising alumite-coated aluminum substrates show the CSS durability of 10,000—20,000 cycles, while the magnetic disk of the present invention shows the CSS durability of 30,000 cycles or more, in case where $\gamma$-FE$_2$O$_3$ magnetic medium layers are formed on the disks.

Incidentally, the CSS durability is herein determiend as follows: A magnetic disk starts to rotate and its rotational speed increases for 20 seconds to reach the level of 3600 rpm at A as shown in the figure. It rotates on that level for 5 seconds, (A→B), and its speed decreases for 35 seconds to zero (B→C). It is thereafter stationary for 15 seconds (C→D). Thus, one cycle of contact-start-stop is completed. This cycle is repeated until the output of the magnetic disk decreases 10%. The number of such CSS cycles represents the CSS durability.

The present invention will be explained in further detail by means of the following examples.

Example 1A

Alumina-base ceramic powder materials of the compositions as shown in Table I were prepared. Each powder had more than 99.5% purity and not more than 1.0 µm of particle size. Each ceramic powder material was wet-blended for 24 hours and dried. It was then granulated and molded at room temperature under the pressure of 1000 bar to form a disk body of 150 mm in outer diameter, 35 mm in inner diameter and 2.3 mm in thickness. The molded disk body was sintered at 1600°C under atmospheric pressure for one hour. The sintered disk body was then subjected to hot isostatic press (HIP) at 1500°C and 1000 bar for one hour. It was then lapped and polished mechanochemically to provide a disk substrate with a mirror surface, having an outer diameter of 130 mm, an inner diameter of 40 mm and a thickness of 2 mm.

With respect to each of the finished disk substrates, porosity was determined by observing a surface thereof by a microscope and by a water substitution method. The porosity is shown in Table I together with a thermal expansion coefficient ($\alpha$) and Vickers' hardness (Hv) for each disk substrate.

0 131 895

TABLE I

| No. | Composition (wt.%) | Porosity (%) | $\alpha$ ($\times 10^{-7}$°C$^{-1}$) | Hv |
|---|---|---|---|---|
| 1 | $Al_2O_3$ | 0.2 | 80 | 1600 |
| 2 | $Al_2O_3$—0.2%$Y_2O_3$ | 0.2 | 78 | 1600 |
| 3 | $Al_2O_3$—0.6%$Y_2O_3$ | <0.1 | 79 | 1600 |
| 4 | $Al_2O_3$—1.0%$Y_2O_3$ | <0.1 | 80 | 1600 |
| 5 | $Al_2O_3$—2%$Y_2O_3$ | <0.1 | 80 | 1600 |
| 6 | $Al_2O_3$—4%$Y_2O_3$ | <0.1 | 80 | 1550 |
| 7 | $Al_2O_3$—7%$Y_2O_3$ | 0.3 | 77 | 1500 |
| 8 | $Al_2O_3$—0.1%MgO | 0.2 | 80 | 1600 |
| 9 | $Al_2O_3$—0.5%MgO | <0.1 | 77 | 1600 |
| 10 | $Al_2O_3$—1.0%MgO | <0.1 | 80 | 1600 |
| 11 | $Al_2O_3$—6%MgO | 0.2 | 80 | 1500 |
| 12 | $Al_2O_3$—1.0%$Cr_2O_3$ | <0.1 | 78 | 1600 |
| 13 | $Al_2O_3$—1.0%$SiO_2$ | <0.1 | 80 | 1600 |
| 14 | $Al_2O_3$—1.0%NiO | <0.1 | 80 | 1600 |
| 15 | $Al_2O_3$—2%$MnO_2$ | <0.1 | 81 | 1500 |
| 16[1] | $Al_2O_3$—2%$TiO_2$ | <0.1 | 80 | 1400 |
| 17[2] | $Al_2O_3$—2%$MnO_2$—2%$TiO_2$ | <0.1 | 80 | 1250 |

Note: 1) Sintered at 1500°C, the hot-isostatically pressed at 1300°C and 1000 bar.
2) Sintered at 1400°C, and then hot-isostatically pressed at 1300°C and 1000 bar.

The disk substrate of Sample Nos. 1, 2, 7, 8 and 11 do not satisfy the surface precision requirements of the present invention. It is thus clear that the sintering aids should be 0.5—5 weight% of $Al_2O_3$.

Example 1b

With respect to the disk substrate of Sample No. 9 in Example 1a, average roughness Ra, maximum roughness Rmax, short-range undulation (SRU) and defect density (DD) and Young's modulus (E) were measured.

| | |
|---|---|
| Ra | 0.006 |
| Rmax | 0.04 μm |
| SRU | 0.05 μm/4mm |
| DD | ≤2 defects/mm² |
| E | $3.6 \times 10^5$ N/mm² |

Ra and Rmax were measured by using surface roughness testers (TALYSURF, TALYSTEP and TALYROUND, Taylor Hobson, England), and the defect density was determined by counting the number of pores of more than 3 μm in diameter in a unit area (one mm²). The defect density measurement was

6

conducted at 8 spots located approximately midway between the center and periphary of the disk substrate at 45° radial intervals.

The relationships between the porosity and surface precision were also examined on $Al_2O_3$—0.5wt.%MgO disk substrates. Comparison was made among the following two substrates:

1. As-sintered, no HIP

2. Full HIP (Sample No. 9 above)

The results are shown in Table II.

TABLE II

| No. | Porosity (%) | Ra (µm) | Rmax (µm) | SRU (µm/4mm) | Defect Density (3 µm or more) |
|---|---|---|---|---|---|
| 1 | 1 | 0.02 | 0.2 | 0.07 | Several hundreds |
| 2 | ≤0.1 | 0.006 | 0.04 | 0.05 | ≤2 |

The disk substrate (Sample No. 9) was kept at 200°C and was subjected to HF magnetron sputtering with an Fe target in an argon atmosphere containing 50% of oxygen. During the sputtering process, oxidation reaction took place, so an $Fe_3O_4$ thin film was formed on the substrate surface. The substrate was then heated at 300°C for three hours to oxidize the $Fe_3O_4$ film to provide a 170 nm thick $\gamma$—$Fe_2O_3$ film. The substrate surface was subjected to a burnishing treatment with a sapphire head of the same type as reported by Nippon Telegraph and Telephone Public Corp., and a 20 nm thick lubricant layer of fluorocarbon polymer (Krytox, du Pont, U.S.A.) was formed on the surface to provide a thin-film magnetic disk of longitudinal magnetic recording. The finished magnetic disk had Ra of 0.011 µm, Rmax of 0.1 µm, and short-range undulation of 0.06 µm/4mm.

A CSS test was performed by the procedure as mentioned above (magnetic disc rotation: 3600 rpm), using a 3350-type magnetic head (Mn—Zn ferrite core slider). The test was conducted at various flying heights. As a result, it was observed that even when the spacing was as small as 0.15 µm, the magnetic head was flying over the disk stably without contacting with the disk surface. In this case, the CSS durability was as high as 30,000 cycles.

For the purpose of comparison, an aluminum disk having a three- µm alumite surface layer was treated in the same manner as above to provide a thin-film magnetic disk. Though the A1 magnetic disk had surface roughness close to that of the magnetic disk of this Example, and showed the stable flying height of 0.2 µm, its CSS durability was about 10,000—20,000.

It is clear from the above comparison that a magnetic disk comprising a high-density (not more than 0.1% porosity), high-hardness $Al_2O_3$-base ceramic substrate is superior to that of an aluminium substrate in terms of CSS characteristics.

Example 2a

Alumina-(titanium carbide and/or boride)-base ceramics were examined.

Ceramic powder materials (purity: more than 99.5%, particle size: not more than 1.0 µm) as shown in table III below were molded into the disk shape as in Example 1a. Each molding was placed in an atmosphere of reduced pressure to remove the gas entrapped therein, and hot-pressed at 1650°C under the press pressure of 300 bar for one hour. A HIP treatment was then performed at 1500°C and 1000 bar for one hour. The substrate thus prepared was surface treated in the same way as in Example 1a. Porosity, thermal expansion coefficient ($\alpha$) and Vickers' hardness Hv were measured for each disk substrate. The results are shown in Table III.

**0 131 895**

TABLE III

| No. | Composition (wt.%) | | | | Porosity (%) | $\alpha$ ($\times 10^{-7}$/°C) | Hv |
| | $Al_2O_3$ | TiC | $TiB_2$ | Others | | | |
| --- | --- | --- | --- | --- | --- | --- | --- |
| 1 | 94.5 | 5 | — | 0.5MgO | <0.1 | 78 | 1700 |
| 2 | 79.5 | 20 | — | 0.5MgO | <0.1 | 72 | 1900 |
| 3 | 70 | 30 | — | — | <0.1 | 70 | 2000 |
| 4 | 68.5 | 30 | — | 0.5MgO 1.0AlN | <0.1 | 70 | 2000 |
| 5 | 68 | 30 | | 2SiO_2 | <0.1 | 70 | 2000 |
| 6 | 49.5 | 50 | — | 0.5MgO | <0.1 | 70 | 2100 |
| 7 | 29.5 | 70 | — | 0.5MgO | 0.3 | 69 | 2300 |
| 8 | 94.5 | — | 5 | 0.5MgO | <0.1 | 79 | 1700 |
| 9 | 79.5 | — | 20 | 0.5MgO | <0.1 | 73 | 1900 |
| 10 | 69.5 | — | 30 | 0.5MgO | <0.1 | 72 | 2000 |
| 11 | 49.5 | — | 50 | 0.5MgO | <0.1 | 72 | 2100 |
| 12 | 29.5 | — | 70 | 0.5MgO | 0.5 | 68 | 2300 |
| 13 | 93.5 | 3 | 3 | 0.5MgO | <0.1 | 77 | 1700 |
| 14 | 85.5 | 7 | 7 | 0.5MgO | <0.1 | 73 | 1900 |
| 15 | 75 | 5 | 20 | — | <0.1 | 71 | 2000 |
| 16 | 75 | 20 | 5 | — | <0.1 | 72 | 2000 |
| 17 | 72 | 14 | 14 | — | <0.1 | 70 | 2000 |
| 18 | 71 | 14 | 14 | 1Mgo | <0.1 | 72 | 2000 |
| 19 | 68 | 14 | 14 | 4MgO | <0.1 | 72 | 2000 |
| 20 | 71 | 14 | 14 | 1Y_2O_3 | <0.1 | 73 | 2000 |
| 21 | 71 | 14 | 14 | 1Cr_2O_3 | <0.1 | 72 | 2000 |
| 22 | 71 | 14 | 14 | 1SiO_2 | <0.1 | 71 | 1900 |
| 23 | 71 | 14 | 14 | 1NiO | <0.1 | 72 | 1950 |
| 24 | 71 | 14 | 14 | 1MnO_2 | <0.1 | 73 | 1900 |
| 25 | 71 | 14 | 14 | 1TiO_2 | <0.1 | 71 | 1850 |
| 26 | 70 | 14 | 14 | 1ZrO_2 | <0.1 | 72 | 1950 |
| 27 | 39.5 | 20 | 40 | 0.5MgO | 0.2 | 70 | 2100 |
| 28 | 39.5 | 40 | 20 | 0.5MgO | 0.2 | 70 | 2100 |

8

It was appreciated from the above table that Tic and/or $TiB_2$ should be up to 50 weight% in total. It was further observed that such sintering aids as MgO, AlN, $ZrO_2$, $SiO_2$, $Y_2O_3$, $Cr_2O_3$, NiO, $MnO_2$, and $TiO_2$ were effective for increasing the density of the resulting substrate.

Example 2b

The disk substrate (Sample No. 4) of Example 2a was measured with respect to Young's modulus (E), Ra, Rmax, short-range undulaton (SRU) and defect density (DD) (3 µm or more pores).

| | |
|---|---|
| E | $4.0 \times 10^5$ N/mm² |
| Ra | 0.004 µm |
| Rmax | 0.03 µm |
| SRU | 0.04 µm/4mm |
| DD | ≤one defect/mm² |

A magnetic disk was manufactured in the same way as in Example 1b. The resulting magnetic disk had the following characteristics.

| | |
|---|---|
| Ra | 0.005 µm |
| Rmax | 0.05 µm |
| SRU | 0.05 µm/4mm |

The CSS test of this magnetic disk conducted in the same way as in Example 1b showed that the stable flying height was 0.13 µm and the CSS durability was 50,000 cycles.

The same CSS test was repeated using a 3370-type thin-film magnetic head ($Al_2O_3$-30wt.% TiC slider and Permalloy thin-film). As a result, it was observed that it had a CSS durability of more than 20,000 cycles. On the other hand, an aluminum-substrate magnetic disk having the same magnetic medium layer had the CSS durability of as small as 10,000 cycles, when tested with the same 3370-type magnetic head.

Example 2c

The disk substrate (Sample No. 26) of Example 2a was measured with respect to Young's modulus (E), Ra, Rmax, short-range undulation (SRU) and defect density (DD) (3 µm or more pore).

| | |
|---|---|
| E | $3.9 \times 10^5$ N/mm² |
| Ra | 0.004 µm |
| Rmax | 0.03 µm |
| SRU | 0.04 µm/4mm |
| DD | ≤ one defect/mm² |

A magnetic disk was manufactured in the same way as in Example 1b. The resulting magnetic disk had the following characteristics:

| | |
|---|---|
| Spacing | 0.15 µm |
| CSS | > 80,000 |

Example 3a

Alumina-zirconia-yttria-base ceramics were examined.

Ceramic powder materials having the compositions as shown in Table IV (purity: more than 99.5%, particle size: not more than 1.0 µm) were molded in the same way as in Example 1a. Each molding was sintered at various temperatures under atmospheric pressure for one hour, and the subjected to HIP treatments at various temperatures under 1000 bar for one hour. They were surface-treated as in Example 1a. The finished disk substrates had porosities, thermal expansion coefficients (α) and Hv as shown in Table IV.

TABLE IV

| No. | Composition (wt.%) | | | Sintering Temp. (°C) | HIP Temp. (°C) | Porosity (%) | α (× $10^{-7}$/°C) | Hv |
|---|---|---|---|---|---|---|---|---|
| | $Al_2O_3$ | $ZrO_2$ | $Y_2O_3$ | | | | | |
| 1 | 98 | 1 | 1 | 1600 | 1400 | <0.1 | 80 | 1600 |
| 2 | 94 | 5 | 1 | 1600 | 1400 | <0.1 | 81 | 1600 |
| 3 | 88 | 10 | 2 | 1600 | 1400 | <0.1 | 81 | 1550 |
| 4 | 70 | 30 | — | 1600 | 1400 | 0.3 | 80 | 1450 |
| 5 | 69 | 30 | 2 | 1600 | 1400 | <0.1 | 82 | 1500 |
| 6 | 67 | 30 | 3 | 1600 | 1400 | <0.1 | 82 | 1500 |
| 7 | 50 | 30 | 20 | 1600 | 1400 | 0.3 | 82 | 1500 |
| 8 | 45 | 50 | 5 | 1600 | 1400 | <0.1 | 85 | 1400 |
| 9 | 23 | 70 | 7 | 1500 | 1350 | <0.1 | 87 | 1350 |
| 10 | 10 | 83 | 7 | 1500 | 1350 | <0.1 | 90 | 1300 |
| 11 | 10 | 66 | 14 (10TiC) | 1450 | 1300 | <0.1 | 92 | 1400 |
| 12 | 10 | 66 | 14 (10TiB) | 1450 | 1300 | <0.1 | 92 | 1400 |
| 13 | 5 | 87 | 8 | 1500 | 1350 | <0.1 | 95 | 1250 |
| 14 | 1 | 90 | 9 | 1500 | 1350 | <0.1 | 98 | 1200 |

It was observed that $Y_2O_3$ was effective for increasing the density of the $Al_2O_3$—$ZrO_2$ sintered ceramics. The reason therefor is considered that $Y_2O_3$ stabilizes $ZrO_2$.

Example 3b

The HIP-treated, sintered body of Sample No. 6 in Example 3a had the following properties:

| | |
|---|---|
| Young's modulus | $3.7 \times 10^5$ N/mm$^2$ |
| Ra | 0.004 μm |
| Rmax | 0.02 μm |
| Short-range undulation | 0.04 μm/4mm |
| Defect density* | ≤ one defect/mm$^2$ |

Note* . . . Measured for pores of not less than 3 μm

A magnetic disk was prepared from this substrate in the same way as in Example 1b. It was observed that the resulting magnetic disk was stably flying at the spacing of 0.13 μm and endured more than 50,000 CSS cycles.

Example 4a

Zirconia-base ceramics were examined.

Ceramic powder materials having the compositions as shown in Table V were molded in the same way as in Example 1a. Each powder material had more than 99.5% purity and not more than 1.0 μm of particle

size. Each of the resulting moldings was then sintered at 1450°C under atmospheric pressure for one hour, and then subjected to hot isostatic press (HIP) at 1300°C and 1000 atms (1013 bar) for one hour. The resulting disk substrates were surface-treated as in Example 1a. They had porosities, thermal expansion coefficients (α) and Hv as shown in Table V.

### TABLE V

| No. | Composition (wt.%) | | porosity (%) | α (× $10^{-7}$/°C) | Hv |
|-----|------|------|------|------|------|
|     | ZrO$_2$ | Y$_2$O$_3$ | | | |
| 1 | 98 | 2 | 0.2 | 105 | 1200 |
| 2 | 93 | 7 | <0.1 | 100 | 1200 |
| 3 | 88 | 12 | <0.1 | 98 | 1250 |
| 4 | 82 | 18 | <0.1 | 97 | 1250 |
| 5 | 65 | 35 | 0.5 | 95 | 1100 |

### Example 4b

The disk substrate of Sample No. 4 of Example 4a had the following properties:

| | |
|---|---|
| E | $2.3 \times 10^5$ N/mm$^2$ |
| Ra | 0.003 µm |
| Rmax | 0.02 µm |
| SRU | 0.03 µm/4mm |
| DD (not less than 3 µm pores) | ≤ one defect/mm$^2$ |

A magnetic disk was prepared from this substrate in the same way as in Example 1b. It was observed that the resulting mangetic disk was stably flying at the spacing of 0.13 µm and endured more than 70,000 CSS cycles.

### Example 5

Zirconia-based ceramics containing composite components were examined.

Ceramic powder materials having the compositions as shown in Table VI (purity: more than 99.5%, particle size: not more than 1.0 µm) were molded in the same way as in Example 1a. Each molding was placed under reduced pressure to remove the gas entrapped therein, and hot-pressed at 1450°C and 300 bar for one hour. The hot-pressed body was then subjected to a HIP treatment at 1300°C and 1000 bar for one hour. The resulting disk substates were surface-treated as in Example 1a. They had porosities, thermal expansion coefficients (α) and Vickers' hardness (Hv) as shown in Table VI.

11

TABLE VI

| No. | ZrO$_2$ | Y$_2$O$_3$ | Others | Porosity (%) | α (× 10$^{-7}$/°C) | Hv |
|---|---|---|---|---|---|---|
| 1 | 81 | 9 | 10TiC | <0.1 | 93 | 1300 |
| 2 | 68 | 2 | 30TiC | 0.2 | 87 | 1350 |
| 3 | 65 | 5 | 30TiC | <0.1 | 88 | 1400 |
| 4 | 63 | 7 | 30TiC | <0.1 | 87 | 1400 |
| 5 | 55 | 15 | 30TiC | <0.1 | 87 | 1400 |
| 6 | 30 | 40 | 30TiC | 0.2 | 87 | 1300 |
| 7 | 63 | 7 | 30TiB$_2$ | <0.1 | 88 | 1450 |
| 8 | 66 | 14 | 10TiC + 10TiB | <0.1 | 95 | 1350 |

Example 6

45 wt.% of Al$_2$O$_3$ powder, 50 wt.% of ZrO$_2$ powder and 5 wt.% of Y$_2$O$_3$ powder were mixed uniformly. Each powder component had more than 99.5% purity and not more than 1.0 μm of particle size. The ceramic powder mixture was molded in the same way as in Example 1a, and the resulting ceramic powder molding was sintered at 1600°C under atmospheric pressure for one hour. The sintered ceramic body was then HIP-treated at 1400°C and 1000 bar for one hour. The same working and surface-treatment as in Example 1a were performed on the HIP-treated, sintered body to provide a disk substrate. It has a porosity of less than 0.1%, Hv of 1400 and a thermal expansion coefficient (α) of 85 × 10$^{-7}$/°C. It also had the following surface precision:

| | |
|---|---|
| Ra | 0.003 μm |
| Rmax | 0.02 μm |
| Short-range undulation | 0.03 μm/4mm |
| Defect density (3 μm or more pore) | ≤ one defect/mm$^2$ |

RF sputtering was performed with a targe of Co and 25 wt.% Ni in an argon atmosphere containing 50% nitrogen (total pressure 18 m Torr (2,4 Pa)) to form a cobalt-nickel magnetic film of 50 nm of the disk substrate. This was then heat-treated at 350°C in vacuum for three hours, and a 50 nm carbon protective coating was then formed on the surface by RF sputtering. The disk was burnished for five minutes with a sapphire burnishing head flying by 0.1 μm over the disk. The resulting magnetic disk had the following surface precision:

| | |
|---|---|
| Ra | 0.006 μm |
| Rmax | 0.08 μm |
| Short-range undulation | 0.03 μm/4mm |

A CSS test was performed using a 3350-type Mn—Zn ferrite magnetic head.

It was observed that the magnetic head was flying stably by 0.1 μm over the magnetic disk. The CSS test revealed that this magnetic disk could endure 100,000 CSS cycles until its output declined 10%.

12

## Example 7

A one-μm thick Cr under layer was formed on the magnetic disk of Example 6 by RF sputtering, and a 60 nm thick cobalt-nickel magnetic medium layer was formed thereon by sputtering with a target of Co-20wt.% Ni in an argon atmosphere. A 50 nm carbon protective layer was further formed in the disk by sputtering. A burnishing treatment was performed in the same way as in Example 6.

The above procedure was repeated on aluminum disk substrates having a 20 μm NiP plating layer and a 10 μm alumite layer, respectively and mechanochemically polished.

With respect to these resulting magnetic disks, surface precision, stable flying height and CSS durability were measured. The results are shown in Table VI.

### TABLE VI

| No. | Disk substrate | Surface precision of disk substrate (μm) | Surface precision of magnetic disk (μm) | Stable flying height (μm) | CSS durability (cycles) |
|---|---|---|---|---|---|
| 1 | Alumina-Zirconia | Ra=0.003 Rmax=0.02 SRU=0.03 | Ra=0.008 Rmax=0.05 SRU*=0.06 | 0.1 | 110,000 |
| 2 | NiP-plated aluminum | Ra=0.01 Rmax=0.15 SRU*=0.1 | Ra=0.015 Rmax=0.23 SRU*=0.1 | 0.2 | 30,000 |
| 3 | Alumite-coated aluminum | Ra=0.02 Rmax=0.15 SRU*=0.07 | Ra=0.03 Rmax=0.25 SRU*=0.12 | 0.25 | 30,000 |

Note * . . . SRU: μm/4mm

The above comparison clearly shows that a magnetic disk constructed from the alumina-zirconia ceramic substrate according to the present invention is much superior to that of an aluminium substrate in terms of surface precision, flying height and CSS durability.

## Example 8

The disk substrate of Example 6 was used to manufacture a thin-film magnetic disk of perpendicular magnetic recording. With a target of 78Ni—14Fe—3Cu—5Mo by weight%, DC magnetron sputtering was conducted to form a 0.5 μm Permalloy layer. A 0.2 μm cobalt-chromium magnetic medium layer was then formed by DC magnetron sputtering with a target of Co-14wt.%Cr. Thereafter, a 20 nm carbon protective layer was formed thereon. A burnishing treatment was carried out for 5 minutes with a sapphire burnishing head flying 0.05 μm over the magnetic disk. The resulting magnetic disk had the following surface precision:

| | |
|---|---|
| Ra | 0.01 μm |
| Rmax | 0.06 μm |
| Short-range undulation | 0.04 μm/4mm |

A CSS test was conducted thereon with a 3370-type thin-film magnetic head, which comprised a slider of $ZrO_2$—9wt.%$Y_2O_3$ having less than 0.1% porosity (sintered at 1450°C under atmospheric pressure for one hour and HIP-treated at 1300°C and 1000 bar for one hour), and a thin film laminate consisting of a Permalloy layer, an alumina layer and a Cu coil layer. As a result, the stable flying height was 0.1 μm and the CSS durability was 200,000 cycles.

Incidentally, when a liquid fluorocarbon was coated in the thickness of 10 μm as a lubricant instead of carbon on the Co—Cr magnetic medium layer of the above alumina-zirconia disk, the magnetic disk showed substantially the samed CSS durability.

A further CSS test was carried out on the magnetic disk of this Example with various thin-film magnetic heads whose core sliders were made of $CaTiO_3$, $BaTiO_3$, $Al_2O_3 \cdot TiC$, and $Al_2O_3/ZrO_2$ ceramics, respectively. The CSS durability of this magnetic disk used with these heads was 30,000 —40,000 cycles. It was thus appreciated that the perpendicular recording, thin-film magnetic disk of this Example has extremely higher resistance to sliding wear when used with a thin-film magnetic head of zirconia-yttria substrate than with

13

those of the other ceramic substrates.

As described above, the present invention provides a high-density, highy-hardness ceramic disk substate having a porosity of not more than 0.1%, Vickers' hardness of not less than 1,200, a thermal expansion coefficient of $70 \times 10^{-7}/°C — 110 \times 10^{-7}/°C$ and Young's modulus of more than $2 \times 10^5$ N/mm². A magnetic disk constructed from the disk substrate can be operated stably at a very small flying height of a magnetic head, (0.1 µm or so). Particularly when a thin film $\gamma$-$Fe_2O_3$ magnetic layer is formed on the disk substrate, the resulting magnetic disk can endure 2—5 times as many CSS cycles as those of conventional disks.

The disk substrate of the present invention has extremely high surface precision, so a magnetic disk manufactured therefrom can have extremely high magnetic recording density.

This makes is possible to provide a small magnetic disk (for instance, $5\frac{1}{4}$ inches (13,34 cm) or less) having high recording capacity. A small magnetic disk is also advantageous in that it does not require so much costly ceramic materials and can be easily manufactured through hot press or hot isostatic press.

**Claims**

1. A magnetic disk substrate manufactured from ceramics, characterised in that said ceramics consist essentially of alumina and/or zirconia the substrate being manufactured by hot press or hot isostatic press, having a porosity of not more than 0.1%, a thermal expansion coefficient of $70 \times 10^{-7}/°C—110 \times 10^{-7}/°C$ between room temperature and about 400°C, and Vickers' hardness of not less than 1200.

2. A magnetic disk substrate according to claim 1, wherein the alumina-base ceramics comprises up to 5 weight%, preferably at least 0.5 weight%, in total of one or more sintering aids selected from the group consisting of $MgO$, $ZrO_2$, $Y_2O_3$, $Cr_2O_3$, $MnO_2$, $SiO_2$, NiO, and $TiO_2$.

3. A magnetic disk substrate according to claim 1, wherein the alumina·TiC-base and/or alumina·$TiB_2$-base ceramics comprises up to 50 weight%, preferably up to 40 weight%, in total of TiC and/or $TiB_2$ and up to 5 weight%, preferably at least 0.5 weight%, in total of one or more sintering aids selected from the group consisting of $MgO$, $ZrO_2$, $Y_2O_3$, $Cr_2O_3$, $MnO_2$, $SiO_2$, NiO, AlN and $TiO_2$.

4. A magnetic disk substrate according to claim 1, wherein the zirconia·yttria-base ceramics comprises 4—30 weight%, preferably 10—25 weight%, of $Y_2O_3$.

5. A magnetic disk substrate according to claim 4, wherein said zirconia·yttria-base ceramics further comprises up to 50 weight%, preferably up to 30 weight%, in total of one or more composite components selected from the group consisting of carbides, nitrides and borides of elements of Groups IVa, Va, and VIa of the Periodic Table.

6. A magnetic disk substrate according to claim 1, wherein the alumina·zirconia·yttria-base ceramics comprises up to 95 weight% of alumina, and the ratio of yttria to zirconia is 4—30 weight%, preferably 10—25 weight%.

7. A magnetic disk substrate according to claim 6, wherein said alumina·zirconia-base ceramics further comprises up to 50 weight% in total of one or more composite components selected from the group consisting of carbides, nitrides and borides of elements of Groups IV, V and VI of the Periodic Table.

8. A magnetic disk substrate according to any of claims 1 to 7, wherein said disk substrate has an average roughness of not more than 0.01 µm, and short-range undulation of not more than 0.06 µm/4 mm.

9. A magnetic disk substrate according to claim 8, wherein said disk substrate has maximum surface roughness of not more than about 0.01 µm.

10. Use of the magnetic disk substrate according to any of claims 1 to 9 for a longitudinal or a perpendicular magnetic recording disk.

**Patentansprüche**

1. Aus Keramik hergestelltes Magnetplattensubstrat, dadurch gekennzeichnet, daß die Keramik im wesentlichen aus Aluminiumoxid und/oder Zirkonoxid besteht und das Substrat durch Heißpressen oder isostatisches Heißpressen hergestellt ist, eine Porosität von höchstens 0,1%, einen Wärmeausdehnungskoeffizient von $70 \times 10^{-7}/°C$ bis $110 \times 10^{-7}/°C$ zwischen Zimmertemperatur und etwa 400°C, und eine Vickers-Härte von mindestens 1200 aufweist.

2. Magnetplattensubstrat nach Anspruch 1, wobei die Aluminiumoxid-Keramik insgesamt bis zu 5 Gew.-%, vorzugsweise mindestens 0.5 Gew.-%, eines oder mehrerer Sinter-Hilfsstoffe, ausgewählt aus $MgO$, $ZrO_2$, $Y_2O_3$, $Cr_2O_3$, $MnO_2$, $SiO_2$, NiO und $TiO_2$, enthält.

3. Magnetplattensubstrat nach Anspruch 1, wobei die Aluminiumoxid·TiC- und/oder Aluminiumoxid·$TiB_2$-Keramik insgesamt bis zu 50 Gew.-%, vorzugsweise bis zu 40 Gew.-%, TiC und/oder $TiB_2$ sowie insgesamt bis zu 5 Gew.-%, vorzugsweise mindestens 0,5 Gew.-%, eines oder mehrerer Sinter-Hilfsstoffe, ausgewählt aus $MgO$, $ZrO_2$, $Y_2O_3$, $Cr_2O_3$, $MnO_2$, $SiO_2$, NiO, AlN und $TiO_2$, enthält.

4. Magnetplattensubstrat nach Anspruch 1, wobei die Zirkonoxid·Yttriumoxid-Keramik 4 bis 30 Gew.-%, vorzugsweise 10 bis 25 Gew.-%, $Y_2O_3$ enthält.

5. Magnetplattensubstrat nach Anspruch 4, wobei die Zirkonoxid·Yttriumoxid-Keramik ferner insgesamt bis zu 50 Gew.-%, vorzugsweise bis zu 30 Gew.-%, einer oder mehrerer zusammengesetzter Komponenten, ausgewählt aus carbiden, Nitriden und Boriden der Elemente der Gruppen IVa, Va und VIa des Periodensystems, enthält.

6. Magnetplattensubstrat nach Anspruch 1, wobei die Aluminiumoxid·Zirkonoxid·Yttriumoxid-Keramik bis zu 95 Gew.-% Aluminiumoxid enthält und das Verhältnis von Yttriumoxid zu Zirkonoxid 4 bis 30 Gew.-%, vorzugsweise 10 bis 25 Gew.-% beträgt.

7. Magnetplattensubstrat nach Anspruch 6, wobei die Aluminiumoxid·Zirkonoxid-Keramik ferner insgesamt bis zu 50 Gew.-% einer oder mehrerer zusammengesetzter Komponenten, ausgewählt aus Carbiden, Nitriden und Boriden der Elemente der Gruppen IV, V und VI des Periodensystems, enthält.

8. Magnetplattensubstrat nach einem der Ansprüche 1 bis 7, wobei das Plattensubstrat eine mittlere Rauhigkeit von höchstens 0,01 µm und eine Kurzstreckenwelligkeit von höchstens 0,06 µm/4 mm aufweist.

9. Magnetplattensubstrat nach Anspruch 1, wobei das Plattensubstrat eine maximale Oberflächenrauhigkeit von höchstens etwa 0,01 µm aufweist.

10. Verwendung des Magnetplattensubstrats nach einem der Ansprüche 1 bis 9 für eine Longitudinal- oder Senkrecht-Magnetaufzeichnungsplatte.

**Revendications**

1. Substrat de disque magnétique fabriqué à partir de céramique, caractérisé en ce que ladite céramique se compose essentiellement d'alumine et/ou de zircone, le substrat étant fabriqué par compression à chaud ou par compression isostatique à chaud, ayant une porosité ne dépassant pas 0,1%, un coefficient de dilatation thermique de $70 \times 10^{-7}$/°C — $110 \times 10^{-7}$/°C entre la température ambiante et 400°C environ, et une dureté Vickers non inférieure à 1200.

2. Substrat de disque magnétique selon la revendication 1, dans lequel la céramique à base d'alumine comprend jusqu'à 5% en poids, de préférence au moins 0,5% en poids, au total d'un ou plusieurs agents de frittage sélectionnés parmi le groupe composé de $MgO$, $ZrO_2$, $Y_2O_3$, $Cr_2O_3$, $MnO_2$, $SiO_2$, $NiO$, et $TiO_2$.

3. Substrat de disque magnétique selon la revendication 1, dans lequel la céramique à base d'alumine-TiC et/ou à base d'alumine-$TiB_2$ comprend jusqu'à 50% en poids, de préférence jusqu'à 40% en poids, au total de TiC et/ou $TiB_2$ et jusqu'à 5% en poids, de préférence au moins 0,5% en poids, au total d'un ou plusieurs agents de frittage sélectionnés parmi le groupe composé de $MgO$, $ZrO_2$, $Y_2O_3$, $Cr_2O_3$, $MnO_2$, $SiO_2$, $NiO$ AlN et $TiO_2$.

4. Substrat de disque magnétique selon la revendication 1, dans lequel la céramique à base de zircone-yttria comprend 4—30% en poids, de préférence 10—25% en poids, du $Y_2O_3$.

5. Substrat de disque magnétique selon la revendication 4, dans lequel ladite céramique à base de zircone-yttria comprend de plus jusqu'à 50% en poids, de préférence jusqu'à 30% en poids, au total d'un ou plusieurs composants mixtes sélectionnés parmi le groupe composé de carbures, nitrures et borures d'éléments des Groupes IVa, Va, et VIa du Tableau Périodique.

6. Substrat de disque magnétique selon la revendication 1, dans lequel la céramique à base d'alumine-zircone-yttria comprend jusqu'à 95% en poids d'alumine, et la proportion d'yttria au zircone est de 4—30% en poids, de préférence 10—25% en poids.

7. Substrat de disque magnétique selon la revendication 6, dans lequel la céramique à base d'alumine-zircone comprend de plus jusqu'à 50% en poids au total d'un ou plusieurs composants mixtes sélectionnés parmi le groupe composé de carbures, nitrures et borures d'éléments des Groupes IV, V et VI du Tableau Périodique.

8. Substrat de disque magnétique selon l'une quelconque des revendications 1 à 7, dans lequel ledit substrat de disque a une rugosité moyenne ne dépassant pas 0,01 µm, et une ondulation à courte portée ne dépassant pas 0,06 µm/4 mm.

9. Substrat de disque magnétique selon la revendication 8, dans lequel ledit substrat de disque a une rugosité de surface moyenne ne dépassant pas 0,01 µm environ.

10. Utilisation du substrat de disque magnétique selon l'une quelconque des revendications 1 à 9 pour un disque d'enregistrement magnétique longitudinal ou perpendiculaire.

ROTATION OF MAGNETIC DISK(RPM)